Europäisches Patentamt

European Patent Office

Office européen des brevets

(19)

(11) Publication number: **0 020 664**
**B1**

(12) **EUROPEAN PATENT SPECIFICATION**

(45) Date of publication of patent spEcification: **11.04.84**

(51) Int. Cl.³: **H 01 M 8/20, C 25 B 11/04**

(21) Application number: **79901672.0**

(22) Date of filing: **20.11.79**

(86) International application number:
**PCT/US79/00997**

(87) International publication number:
**WO 80/01221 12.06.80 Gazette 80/13**

(54) **CATALYTIC SURFACE FOR REDOX CELL ELECTRODE.**

(30) Priority: **29.11.78 US 964754**

(43) Date of publication of application:
**07.01.81 Bulletin 81/1**

(45) Publication of the grant of the patent:
**11.04.84 Bulletin 84/15**

(84) Designated Contracting States:
**CH DE FR GB NL SE**

(56) References cited:
DE - B - 1 006 479
DE - C - 914 264
US - A - 649 478
US - A - 2 485 258
US - A - 3 178 315
US - A - 3 255 046
US - A - 3 279 949
US - A - 3 505 182
US - A - 3 540 934
US - A - 3 616 305
US - A - 3 920 474
US - A - 3 996 064

(73) Proprietor: **NATIONAL AERONAUTICS AND SPACE ADMINISTRATION**
**Mail Code GP-4 400 Maryland Avenue, Southwest**
**Washington, DC 20456 (US)**

(72) Inventor: **Giner, Jose D**
**8B Charlesbank Way**
**Waltham, MA 02154 (US)**
Inventor: **CAHILL, Kathleen J.**
**31-15 Middlesex Circle**
**Waltham, MA 02154 (US)**

(74) Representative: **Waxweiler, Jean et al,**
**OFFICE DENNEMEYER S.à.r.l. 21-25 Allée Scheffer P.O.Box 41**
**L-2010 Luxembourg (LU)**

(56) References cited:
US - A - 4 053 684
US - A - 4 159 366

CHEMICAL ABSTRACTS, vol. 82, no. 20, 19th May 1975, page 143, no. 127471c Columbus, Ohio, U.S.A.

Courier Press, Leamington Spa, England.

Catalytic surface for redox cell electrode

The present invention concerns an electrical energy storage cell of the redox type comprising first and second chambers separated by an ion permeable membrane, an electrode which in the discharging mode of functioning of the cell is an anode electrode in said first chamber including an anode fluid, another electrode which in the discharging mode of functioning of the cell is a cathode electrode in said second chamber including a cathode fluid, said anode electrode and said cathode electrode being electrically conductive but inert with respect to the anode fluid and cathode fluid, respectively, said anode electrode having a coating of one or more metals deposited thereon to provide a surface which will act as a catalyst for electrochemical reduction and oxidation activity and said anode fluid containing a chromic/chromous couple.

A need exists for storing bulk quantities of electrical power obtained from intermittent or random sources such as wind-driven generators, and solar cells.

Pumped water storage systems wherein water from a water storage pond at one level is directed to a water storage pond at a lower level through a hydro-electric plant having a water pumping capability has proven to be a viable method of energy storage. Unfortunately, such facilities are limited to areas where the terrain is suitable for providing water sources at different elevations.

A number of other methods have been considered including the storage of compressed air in large reservoirs, flywheels, capacitive storage, inductive storage and a number of electrochemical schemes. Electrochemical storage batteries are generally expensive.

Electrically rechargeable redox flow cell systems are well known and have a very high overall energy efficiency as compared to other systems. Redox type cells also can be discharged more completely than secondary battery systems. Additionally, redox cells are inexpensive as compared to secondary batteries and do not deteriorate as significantly when repeatedly discharged and recharged.

U.S.—A—3 996 064 is useful background for the understanding of the present invention. In that patent an electrically rechargeable redox flow cell is disclosed wherein an electric potential is obtained between electrodes disposed respectively in an anode fluid having a chromium/chromous couple and a cathode fluid having a ferrous/ferric couple. The anode and cathode fluids are separated by an ion selective membrane. The electrodes are both disclosed as comprised of porous graphite products which are inert to electrochemical reaction with the anode and cathode fluids while promoting the redox reaction on their surfaces.

The DE—B—1006479 describes a diaphragm containing redox cell wherein the anode surface is formed of lead coated on a conductive carrier material which can, for example, be carbon.

The US—A—2 485 258 describes the use of electrodes comprising lead coated on a copper, silver or gold substrate for use in electrolytic cells for effecting the electrolytic reduction of organic compounds.

It is an object of the invention to provide a redox cell which will deliver much greater current for any given electrode surface area than prior art devices. An increasingly greater percentage of current is delivered when compared to prior art redox cells as the cell approaches a discharged condition.

The electrical energy storage cell of the redox type according to the present invention is characterized in that said metal coating deposited on the anode electrode includes a layer selected from the group consisting of silver, gold and copper disposed between the surface of said anode electrode and a layer of lead and/or cadmium.

In accordance with the invention, catalytic coatings are provided on the surface of the anode electrode to enhance the reduction and oxidation activity of the desired ions in the fluid. In the iron/chromium fluid system of the preferred embodiment, the lead surface enhances the chromium reduction during the charging of the cell and produces a 60-fold increase of reduction current density over an untreated electrode.

When the redox cell is being discharged, the lead also functions very well as a surface for the reversible electrochemical oxidation of the chromous ions to chromic ions, however, the lead itself also undergoes electrochemical oxidation and is deplated from the anode surface.

The thin metal layer of copper, silver or gold, which becomes exposed to the anode fluid, provides an electrochemically active surface for the rapid oxidation of the chromous ions, and at the same time is less subject to being oxidized than the lead. The copper produces a 50 fold increase in current density and the gold and silver both produce about a 90 fold increase over plain carbon electrodes. During the recharging process, the lead is replated onto the layer of copper, silver or gold and is again available to promote the reduction activity of the chromic ions.

Thus the invention further provides an electrical energy storage cell of the redox type comprising first and second chambers separated by an ion permeable membrane, an electrode which in the discharging mode of functioning of the cell is an anode electrode in said first chamber including an anode fluid, another electrode which in the discharging mode of functioning of the cell is a cathode electrode in said second chamber including a cathode fluid, said anode electrode and said cathode electrode being electrically conductive but inert with respect to the anode fluid and cathode fluid respectively, said anode electrode having a coating of one or more metals deposited thereon to provide a surface which will act as a catalyst for electrochemical reduction and oxidation activity, said anode fluid containing a chromic/chromous couple and said anode fluid having a lead chloride or cadmium chloride or a combination of both dissolved therein whereby the lead and/or cadmium ions of said salt plate onto the anode electrode during the operation of said cell to provide a surface for catalyzing electrochemical activity of said cell, said metal coating deposited on the anode electrode including a layer selected from the group of silver, gold and/or copper disposed between the surface of said anode electrode and the layer of lead and/or cadmium. Each layer of copper, silver, or gold may be 2—5 monolayers thick. The amount of lead and/or cadmium may be $10^{-4}$ to $10^{-5}$ M/liter of anode fluid.

According to the invention, a method making the electrical energy storage cell of the redox type described above is characterized by the steps of dissolving a metal chloride salt selected from the group consisting of lead chloride and cadmium chloride to the anode fluid and then charging the cell to plate the metal ions of said salt onto an electrically conductive inert electrode which is first coated with a metal selected from the group consisting of silver, gold and copper, said inert electrode being disposed in the anode fluid.

The metal ions produced in said fluid by said metal chloride salt may be in the amount of $10^{-4}$ to $10^{-5}$ M/liter of anode fluid.

The porous inert electrode to be disposed in the anode chamber may first be saturated with a solution of a salt selected from the group consisting of gold chloride, silver chloride and copper chloride and then heat treated.

The inert electrode may be provided with the coating selected from the group of metals consisting of silver, gold and copper and the coating of a metal selected from lead or cadmium before disposing the electrode in the anode fluid.

In order that the invention may be fully understood reference is made on the accompanying drawings, wherein:

Fig. 1 is a cross-sectional view of the redox cell embodying the invention showing the anode and cathode fluid supply systems schematically.

Fig. 2 is a graph illustrating the increased current density in a redox cell embodying the invention.

Fig. 3 is a graph illustrating current density versus potential for different electrode materials.

Fig. 4 illustrates current density versus potential for a carbon electrode with a catalytic coating and utilizing desired ions in the fluid to plate out or the coated electrode.

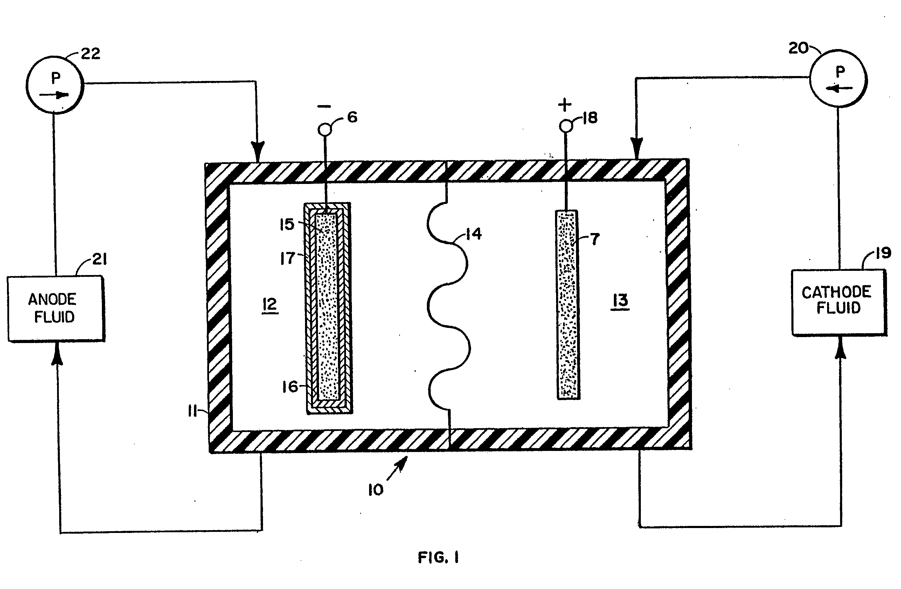

Referring now to Fig. 1, there is shown a redox cell 10 comprising container 11, divided into compartments 12 and 13 by an ion conductive membrane 14. The graphite electrode 15 is disposed in the chamber 12 and connected to an output terminal 6 while a graphite electrode 7 is disposed in compartment 13 and connected to an output terminal 18. Electrode 15 in the anode compartment 12 is coated with metal layers 16 and 17 to be more fully described hereinafter.

As shown, a cathode fluid from a cathode fluid source 19 is circulated by a pump 20 through compartment 13. Similarly, anode fluid from an anode fluid source 21 is circulated by a pump 22 through the compartment 12.

In a preferred embodiment the redox cell 10 utilizes an iron/chromium system wherein the cathode fluid contains a ferrous/ferric couple while the anode fluid contains a chromic/chromous couple. Both fluids are acidified solutions between 1 and 4 molars. The anode fluid preferably contains water and HCl (aqueous solution of HCl) having dissolved therein a chromium chloride salt whereby cations in a reduced state are produced. The cathode fluid likewise is water and HCl but has dissolved therein an iron chloride salt whereby cations in an oxidized state are produced. These fluids provide the desired couples in each of the chambers 12 and 13. A more complete discussion of the couple, the fluid and electrode requirements and membrane consideration is given in U.S. patent No. 3,996,064 which is incorporated herein by reference.

In accordance with the present invention, it has been found that a coating of lead on the inert electrode 15 substantially increases the current density of the electrode, and consequently, the current available at terminals 6 and 18. This results from the fact that chromic reduction has been found to occur very rapidly on the lead surface. At the same time lead is also representative of a class of non-noble metals that possess a very high hydrogen over voltage, which advantageously results in a minimization of the rate of hydrogen evolution to preserve the electrical balance of the fluids. Although lead chloride is discussed herein, it is noted that cadmium chloride may be substituted for or used in combination with lead chloride. Cadmium chloride achieves the same results as lead chloride in increasing catalytic activity of a carbon electrode for the reduction of chromic chloride with the simultaneous inhibition of hydrogen evolution.

On a lead surface which was prepared by the electrodeposition of a very thin layer of lead onto a smooth carbon rod, the reduction current was measured to be 12 ma/cm² at an electrode potential of —600 millivolts (mv) versus a standard calomel electrode (SCE). Under like conditions, the reduction current for an untreated electrode was only 0.2 ma/cm². Thus, the lead coating on a carbon rod provided a 60-fold increase of reduction current.

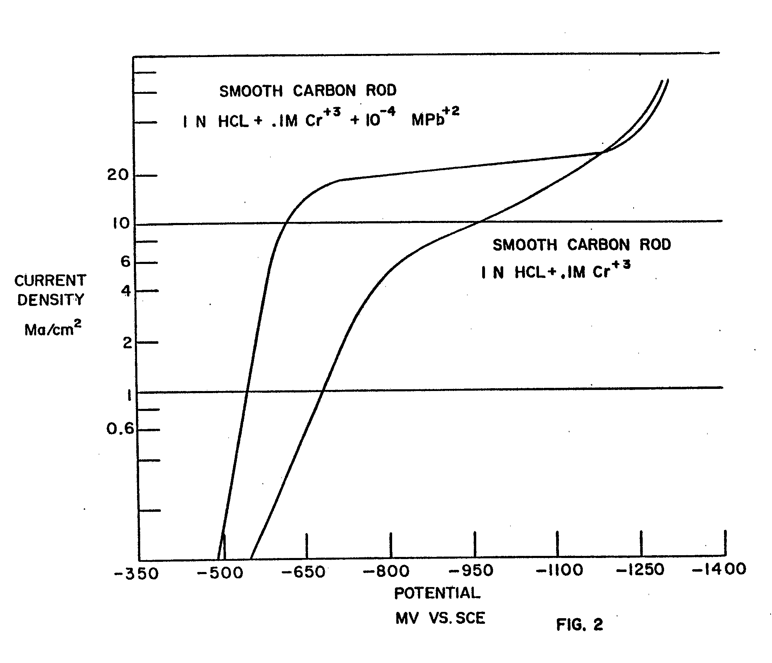

Referring now to Fig. 2, there is shown graphically the relative performance obtained over a wide range of potentials of a solution that contained no lead ions and one that contained $10^{-4}$ molars of lead ions.

The lead layer 17 may be coated onto the electrode 15 before it is disposed in chamber 12 to be contacted by the circulating anode with fluid. The lead layer may also be obtained by simply dissolving lead chloride in the anode fluid before charging the redox cell and allowing the lead, which is subject to anodic dissolution, to plate onto the electrode structure during the charging mode of the chromous/chromic reaction.

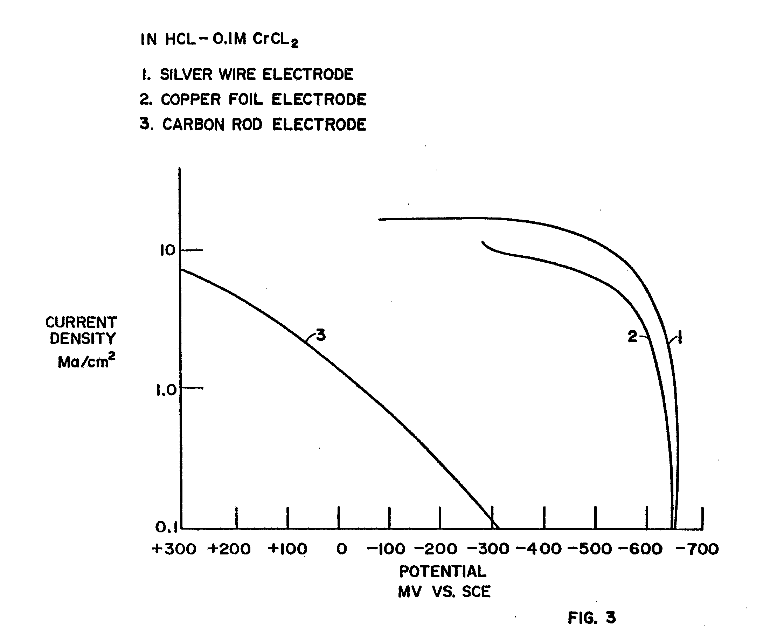

As mentioned previously, each time the redox cell is discharged, the lead is deplated from the anode by electrochemical oxidation and redissolved in the anode fluid. Because the carbon and graphite material of the electrode structure does not provide an active surface for the oxidation of the chromous ions, a further aspect of the invention is the provision of metal layer 16 as an electrochemically active surface between the lead layer and the electrode surface for this purpose. Metal layer 16 may be selected from the group comprising copper, silver and gold which have all been found to be electrochemically active surfaces for the rapid electrochemical oxidation of chromous ions, and at the same time, are less subject to being electrochemically oxidized than lead. Fig. 3 graphically illustrates the current density versus potential for silver, copper and smooth carbon surface. As shown, at an electrode potential of —550 mv versus a saturated calomel electrode the rate of electrochemical oxidation of a chromous ion is less than 0.1 ma/cm². Under the same conditions, the current produced by the silver surface is about 9 ma/cm² which is about a 90-fold increase. A copper surface under the same conditions yields 5 ma/cm² which is a 50-fold increase over a smooth carbon surface.

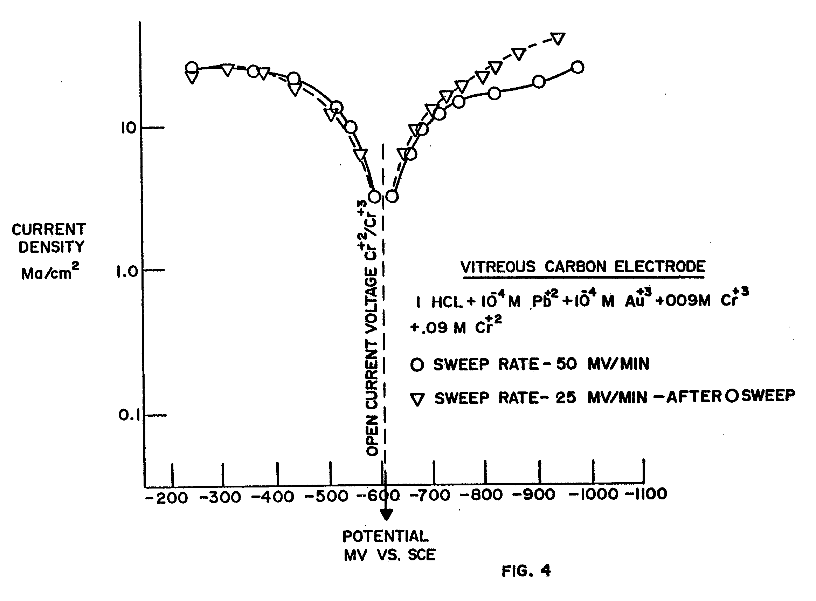

Referring now to Fig. 4, there is graphically shown the current density obtained for various electrode potentials for the chromous/chromic couple where the anode electrode is coated with gold and wherein lead chloride is dissolved in the anode fluid to provide lead ions. With the gold coating on the anode electrode it will be seen at negative 550 mv. versus the saturated calomel electrode the current for the electro oxidation of chromous ion is 9 ma/cm². This is a 90-fold increase over a plain carbon electrode.

The metal coating 16 of silver, gold or copper on the inert electrode is very thin and may be applied by various procedures including electrodeposition, metal spraying, dipping or the like. The amount of metal in the coating is on the order of only a few e.g. 2—5 molecular layers.

A graphite felt was produced with 25 micrograms of gold per cm² of projected area. This provided suitable electrode performance during discharge. The lead coating which goes over the silver, gold or copper coating on the inert electrode, whether applied before the electrode is inserted in the anode chamber or by deposition from the anode fluid, can also be as thin as several monolayers, where a monolayer is one molecule in thickness.

The gold, silver and copper catalysts which enhance the oxidation of chromous ions during the discharge cycle may also be dissolved in the anode solution as salts to provide in-situ activation of the anode electrode. They can also be incorporated into the negative carbon electrode by saturating the electrode with a salt solution of gold, silver or copper followed by heat treatment to dry it.

**Claims**

1. An electrical energy storage cell of the redox type comprising first and second chambers (12, 13) separated by an ion permeable membrane (14), an electrode which in the discharging mode of functioning of the cell is an anode electrode (15) in said first chamber (12) including an anode fluid, another electrode which in the discharging mode of functioning of the cell is a cathode electrode (7) in said second chamber (13) including a cathode fluid, said anode electrode (15) and said cathode electrode (7) being electrically conductive but inert with respect to the anode fluid and cathode fluid respectively, said anode electrode having a coating of one or more metals deposited thereon to provide a surface which will act as a catalyst for electrochemical reduction and oxidation activity and said anode fluid containing a chromic/chromous couple, characterized in that said metal coating deposited on the anode electrode (15) includes a layer (16) selected from the group consisting of silver, gold and copper disposed between the surface of said anode electrode (15) and a layer (17) of lead and/or cadmium.

2. The electrical energy storage cell according to claim 1, characterized in that each layer of copper, silver, or gold is 2—5 monolayers thick.

3. An electrical energy storage cell of the redox type comprising first and second chambers (12, 13) separated by an ion permeable membrane (14), an electrode which in the discharging mode of functioning of the cell is an anode electrode (15) in said first chamber (12) including an anode fluid, another electrode which in the discharging mode of functioning of the cell is a cathode electrode (7) in said second chamber (13) including a cathode fluid, said anode electrode (15) and said cathode electrode (7) being electrically conductive but inert with respect to the anode fluid and cathode fluid respectively, said anode electrode having a coating of one or more metals deposited thereon to provide a surface which will act as a catalyst for electrochemical reduction and oxidation activity, said anode fluid containing a chromic/chromous couple and said anode fluid having a lead chloride or cadmium chloride or a combination of both dissolved therein whereby the lead and/or cadmium ions of said salt plate onto the anode electrode during the operation of said cell to provide a surface for catalyzing electrochemical activity of said cell, said metal coating deposited on the anode electrode (15) including a layer (16) selected from the group of silver, gold and or copper disposed between the surface of said anode electrode (15) and the layer (17) of lead and/or cadmium.

4. The electrical energy storage cell according to claim 3 characterized in that the amount of lead and/or cadmium is $10^{-4}$ to $10^{-5}$ M/liter of anode fluid.

5. A method of making the electrical energy storage cell of the redox type of either of the claims 1 and 2 characterized by the steps of dissolving a metal chloride salt selected from the group consisting of lead chloride and cadmium chloride to the anode fluid and then charging the cell to plate the metal ions of said salt onto an electrically conductive inert electrode which is first coated with a metal selected from the group consisting of silver, gold and copper, said inert electrode being disposed in the anode fluid.

6. The method according to claim 5, characterized in that the metal ions produced in said fluid by said metal chloride salt are in the amount of $10^{-4}$ to $10^{-5}$ M/liter of anode fluid.

7. The method according to claim 5, characterized in that the porous inert electrode to be disposed in the anode chamber is first saturated with a solution of a salt selected from the group consisting of gold chloride, silver chloride and copper chloride and then heat treated.

8. A method of making the electrical energy storage cell of the redox type according to claim 1 or 2 characterized in including the step of providing the inert electrode with a coating selected from the group of metals consisting of silver, gold and copper and of coating a metal selected from lead or cadmium onto said electrode before disposing the electrode in the anode fluid.

## Patentansprüche

1. Redox-Zelle zur Speicherung von elektrischer Energie, mit einer ersten und einer zweiten Kammer (12, 13), die durch eine ionendurchlässige Membran (14) voneinander getrennt sind, mit einer Elektrode, die im Entladungsbetrieb der Zelle eine Anodenelektrode (15) in der ersten Kammer (12) ist, welche ein Anodenfluid enthält, mit einer weiteren Elektrode, die im Entladungsbetrieb der Zelle eine Katodenelektrode (7) in der zweiten Kammer (13) ist, welche ein Katodenfluid enthält, wobei die Anodenelektrode (15) und die Katodenelektrode (7) elektrisch leitend, aber in bezug auf das Anodenfluid bzw. das Katodenfluid inert sind, wobei auf die Anodenelektrode ein Überzug aus einem oder mehreren Metallen aufgebracht ist, um eine Oberfläche zu schaffen, die als ein Katalysator für elektrochemische Reduktions- und Oxidationsaktivität wirkt, und wobei das Anodenfluid ein Chrom(VI)/Chrom(II)-Paar enthält, dadurch gekennzeichnet, daß der auf die Anodenelektrode (15) aufgebrachte Metallüberzug eine Schicht (16) enthält, die unter Silber, Gold und Kupfer ausgewählt ist und zwischen der Oberfläche der Anodenelektrode (15) und einer Schicht (17) aus Blei und/oder Cadmium angeordnet ist.

2. Zelle zur Speicherung von elektrischer Energie nach Anspruch 1, dadurch gekennzeichnet, daß jede Schicht aus Kupfer, Silber oder Gold eine Dicke von 2—5 Monoschichten hat.

3. Redox-Zelle zur Speicherung von elektrischer Energie, mit einer ersten und eienr zweiten Kammer (12, 13), die durch eine ionendurchlässige Membran (14) voneinander getrennt sind, mit einer Elektrode, die im Entladungsbetrieb der Zelle eine Anodenelektrode (15) in der ersten Kammer (12) ist, welche ein Anodenfluid enthält, mit einer weiteren Elektrode, die im Endladungsbetrieb der Zelle eine Katodenelektrode (7) in der zweiten Kammer (13) ist, welche ein Katodenfluid enthält, wobei die Anodenelektrode (15) und die Katodenelektrode (7) elektrisch leitend, aber in bezug auf das Anodenfluid bzw. das Katodenfluid inert sind, wobei auf die Anodenelektrode ein Überzug aus einem oder mehreren Metallen aufgebracht ist, um eine Oberfläche zu schaffen, die als ein Katalysator für elektrochemische Reduktions- und Oxidationsaktivität wirkt, wobei das Anodenfluid ein Chrom(VI)/Chrom(II)-Paar enthält und wobei in dem Anodenfluid ein Bleichlorid oder Cadmiumchlorid oder eine Kombination von beiden gelöst ist, wodurch die Blei- und/oder Cadmiumionen des Salzes sich auf der Anodenelektrode während des Betriebes der Zelle abscheiden, um eine Oberfläche zum Katalysieren der elektrochemischen Aktivität der Zelle zu schaffen, wobei der auf die Anodenelektrode (15) aufgebrachte Metallüberzug eine Schicht (16) enthält, die unter Silber, Gold und/oder Kupfer ausgewählt ist und zwischen der Oberfläche der Anodenelektrode (15) und der Schicht (17) aus Blei und/oder Cadmium angeordnet ist.

4. Zelle zur Speicherung von elektrischer Energie nach Anspruch 3, dadurch gekennzeichnet, daß die Menge an Blei und/oder Cadmium $10^{-4}$ bis $10^{-5}$ Mol/l des Anodenfluids beträgt.

5. Verfahren zum Herstellen der Redox-Zelle zur Speicherung von elektrischer Energie nach Anspruch 1 oder 2, gekennzeichnet durch die Schritte des Lösens eines Metallchloridsalzes, das unter Bleichlorid und Cadmiumchlorid ausgewählt wird, in dem Anodenfluid und des anschließenden Ladens der Zelle, um die Metallionen des Salzes auf eine elektrisch leitende inerte Elektrode abzuscheiden , dei zuerst mit einem unter Silber, Gold und Kupfer ausgewählten Metall überzogen und in dem Anodenfluid angeordnet wird.

6. Verfahren nach Anspruch 5, dadurch gekennzeichnet, daß die in dem Fluid durch das Metallchloridsalz erzeugten Metallionen in einer Menge von $10^{-4}$ bis $10^{-5}$ Mol/l des Anodenfluids vorliegen.

7. Verfahren nach Anspruch 5, dadurch gekennzeichnet, daß die poröse inerte Elektrode, die in der Anodenkammer angeordnet wird, zuerst mit einer Lösung eines Salzes, das unter Goldchlorid, Silberchlorid und Kupferchlorid ausgewählt wird, gesättigt und dann wärmebehandelt wird.

8. Verfahren zum Herstellen der Redox-Zelle zur Speicherung von elektrischer Energie nach Anspruch 1 oder 2, gekennzeichnet durch den Schritt des Versehens der inerten Elektrode mit einem Überzug, der unter den Metallen Silber, Gold und Kupfer ausgewählt wird, und des Aufbringens eines Metalles, das unter Blei oder Cadmium ausgewählt wird, auf die Elektrode, bevor die Elektrode in dem Anodenfluid angeordnet wird.

**Revendications**

1. Elément de stockage d'énergie électrique du type Redox comprenant une première et une seconde chambres (12, 13) séparées par une membrane (14) perméable aux ions, une électrode qui dans le mode de fonctionnement de décharge de l'élément est une électrode d'anode (15) dans cette première chambre (12) comprenant un fluide anodique, une autre électrode qui dans le mode de fonctionnement de décharge de l'élément est une électrode de cathode (7) dans cette second chambre (13) comprenant un fluide cathodique, cette électrode d'anode (15) et cette électrode de cathode (7) étant électriquement conductrices mais inertes par rapport au fluide anodique et au fluide cathodique respectivement, cette électrode d'anode ayant un revêtement d'un ou plusieurs métaux déposé sur celle-ci pour créer une surface qui agira comme un catalyseur pour l'activité de réducton et d'oxydation électrochimique et ce fluid anodique contenant un couple chromique/chromeux, caractérisé en ce que ce revêtement de métal déposé sur l'électrode d'anode (15) comprend une couche (16) choisie dans le groupe consistant en argent, or et cuivre déposée sur la surface de cette électrode d'anode (15) et une couche (17) de plomb et/ou de cadmium.

2. Elément de stockage d'énergie électrique selon la revendication 1, caractérisé en ce que chaque couche de cuivre d'argent ou d'or a une épaisseur de 2—5 monocouches.

3. Un élément de stockage d'énergie électrique du type Redox comprenant une première et une seconde chambres (12, 13) séparées par une membrane (14) perméable aux ions, une électrode qui dans le mode de fonctionnement de décharge de l'élément est une électrode d'anode (15) dans cette première chambre (12) comprenant un fluide anodique, une autre électrode qui dans le mode de fonctionnement de décharge de l'élément est une électrode de cathode (7) dans cette seconde chambre (13) comprenant un fluide cathodique, cette électrode d'anode (15) et cette électrode de cathode (7) étant électriquement conductrices mais inertes par rapport au fluide anodique et au fluide cathodique respectivement, cette électrode d'anode ayant un revêtement d'un ou plusieurs métaux déposé sur celle-ci pour créer une surface qui agira comme un catalyseur pour l'activité de réduction et d'oxydation électrochimique, ce fluide anodique contenant un couple chromique/chromeux et ce fluide anodique ayant un chlorure de plomb ou chlorure de cadmium ou une combinaison des deux dissous dans celui-ci, de sorte que les ions plomb et/ou cadmium de ce sel se plaquent sur l'électrode d'anode pendant le fonctionnement de cet élément pour créer une surface pour catalyser l'activité électrochimique de cet élément, ce revêtement de métal déposé sur l'électrode d'anode (15) comprenant une couche (16) choisie dans le groupe de l'argent, de l'or et/ou du cuivre disposée entre la surface de cette électrode d'anode (15) et la couche (17) de plomb et/ou de cadmium.

4. Elément de stockage d'énergie électrique selon la revendication 3, caractérisé en ce que la quantité de plomb et/ou de cadmium est de $10^{-4}$ à $10^{-5}$ M/litre de fluide anodique.

5. Procédé de fabrication d'un élément de stockage d'énergie électrique du type Redox de l'une quelconque des revendications 1 et 2, caractérisé par les étapes de dissoudre un sel de chlorure métallique choisi dans le groupe comprenant le chlorure de plomb et le chlorure de cadmium dans le fluide anodique et ensuite charger la cellule pour plaquer les ions métalliques de ce sel sur une électrode inerte conductrice électriquement qui est d'abord enduite d'un métal choisi dans le groupe consistant en argent, or et cuivre, cette électrode inerte étant disposée dans le fluide anodique.

6. Procédé selon la revendication 5, caractérisé en ce que les ions de métal produits dans ce fluide par ce sel de chlorure de métal sont en quantité de $10^{-4}$ à $10^{-5}$ M/litre de fluide anodique.

7. Procédé selon la revendication 5, caractérisé en ce que l'électrode inerte, poreuse à disposer dans la chambre anodique est d'abord saturée au moyen d'une solution de sel choisi dans le groupe consistant en chlorure d'or, chlorure d'argent et chlorure de cuivre et ensuite est soumise à un traitement thermique.

8. Procédé de fabrication d'une cellule de stockage d'énergie électrique du type Redox selon la revendication 1 ou 2, caractérisé en ce qu'il comprend les étapes de créer sur l'électrode inerte, un revêtement choisi dans le groupe comprenant les métaux consistant en argent, or et cuivre, et d'appliquer un revêtement de métal choisi parmi le plomb ou le cadmium sur cette électrode avant de disposer l'électrode dans le fluid anodique.

FIG. I

0 020 664

SMOOTH CARBON ROD

I N HCL + .IM $Cr^{+3}$ + $10^{-4}$ MPb$^{+2}$

SMOOTH CARBON ROD

I N HCL + .IM $Cr^{+3}$

CURRENT DENSITY

Ma/cm$^2$

POTENTIAL

MV VS. SCE

FIG. 2

0 020 664

IN HCL — 0.IM CrCL$_2$

1. SILVER WIRE ELECTRODE

2. COPPER FOIL ELECTRODE

3. CARBON ROD ELECTRODE

CURRENT DENSITY Ma/cm$^2$

POTENTIAL MV VS. SCE

FIG. 3

FIG. 4